# EUROPÄISCHE PATENTSCHRIFT

(11) **EP 0 508 377 B1**
(45) Veröffentlichungstag und Bekanntmachung des Hinweises auf die Patenterteilung: **15.07.1998**
(21) Anmeldenummer: 92106000.0
(22) Anmeldetag: 07.04.1992
(51) Int. Cl.: F16D 3/72, F16D 3/50

(54) **Homokinetisches Gelenk**
Constant velocity transmission joint
Joint de transmission homocinétique

(30) Priorität: 10.04.1991 DE 4111724
(43) Veröffentlichungstag der Anmeldung: 14.10.1992
(73) Patentinhaber: Ficht, Reinhold, 85614 Kirchseeon (DE)
(72) Erfinder: Schäfer, Frank, Dipl.-Ing., W-8070 Ingolstadt (DE); Breuer, Norbert, Dipl.-Ing., W-8071 Wettstetten (DE); Ficht, Reinhold, W-8011 Kirchseeon (DE); Vilsmeier, Walter, W-8091 Maitenbeth (DE); Schindler, Manfred, W-8015 Markt Schwaben (DE)
(74) Vertreter: Patentanwälte Dr. Solf & Zapf

(56) Entgegenhaltungen:
- EP-A- 0 254 802
- WO-A-85/05605
- FR-A- 2 056 574
- US-A- 1 871 227
- US-A- 2 883 839
- US-A- 3 677 031

## Beschreibung

Die Erfindung betrifft ein vollkommen gleichförmig arbeitendes homokinetisches Gelenk, das nicht nur Drehbewegungen mit hohen Drehzahlen, sondern auch hohe Leistungen übertragen kann und sich deshalb insbesondere zur Leistungs- und Drehbewegungsübertragung im Kraftfahrzeugbau eignet.

Derartige Gelenke wie z.B. die Bendix-, Rzeppa- oder Birfield-Gelenke sind sehr kompliziert aufgebaut und damit herstellungsmäßig aufwendig und dementsprechend teuer.

Neben den homokinetischen Gelenken sind Gelenke bekannt, die nur annähernd gleichförmige Bewegungen übertragen. Diese Gelenke sind entweder ebenfalls kompliziert aufgebaut oder können nur relativ geringe Leistungen bei relativ niedrigen Drehzahlen übertragen. Insbesondere letzteres trifft auch auf sogenannte drehelastische Gelenke oder Drehkupplungen mit relativ großen Schwenkwinkeln zu, wie sie z.B. aus der DE-PS 12 86 831 bekannt sind. Die aus dieser Druckschrift bekannte, im wesentlichen aus einem Tellerfederpaket mit radial geschlitzten Tellerfedern aufgebaute elastische Kupplung soll zwar in Umfangsrichtung relativ steif sein, die Schlitze schwächen jedoch die Verbindung derart, daß weder hohe Drehzahlen noch große Kräfte übertragbar sind.

Darüber hinaus sind Miniatur-Metallbalg-Kupplungen bekannt, mit denen eine kraftschlüssige Wellen- und Nabenverbindung bei exakter Winkelübertragung erfolgen kann. Die Verbindung kann torsionssteif und spielfrei sein. Solche Metallbalg-Kupplungen eignen sich allenfalls für Potentiometer, Tachos, Impulsgeber und Drehgeber an Maschinen und Computern oder als Meß- und Zähleinrichtungen für Schrittmotoren und kleine Servoantriebe. Hohe Drehzahlen bei großen Kräften können damit jedoch nicht bewältigt werden.

Aus der EP-B 254 802 ist eine hydrcpneumatische Federungsvorrichtung bekannt, die einen Federbalg aus hohlen Einzelsegmenten aus Metall aufweist. Die Einzelsegmente bestehen aus gegeneinander gesetzten, im Querschnitt nach außen konvex gewölbten, peripher miteinander verbundenen Ringscheiben, die mit zu einem zentralen Durchgang konzentrisch angeordneten Sicken versehen sind, wobei die Sicken benachbarter Einzelsegmente formschlüssig ineinanderpassen. Die Einzelsegmente sind angrenzend an den zentralen Durchgang miteinander verschweißt. Im Innern des Federbalgs wird im Betrieb der Federungsvorrichtung ein hydraulischer Druck aufgebaut, der zur Verformung bzw. zum Ausbeulen der Einzelsegmente führen kann. Dieser Verformung wirken die sich ineinanderlegenden Sicken benachbarter Einzelsegmente entgegen, so daß der Federbalg hochbelastbar ist. Aus der EP-B 182 828 ist bekannt, den Federbalg auch in Kreisbogenform zu verwenden, wobei der Durchgang nicht zentral angeordnet ist.

Die US-PS 1,871,227 beschreibt ein homokinetisches Gelenk mit einem Federbalg und einer Innenzentrierung, die eine Führungshülse an dem einen Gelenkteil und einen einen in der Führungshülse sitzenden Kugelkopf tragenden Zapfen am anderen Gelenkteil aufweist. Der Zapfen steht mit dem anderen Gelenkteil in fester Verbindung. Längsbewegungen der Gelenkteile bzw. der Wellen werden daher unmittelbar auf dem Federbalg übertragen. Der Federbalg wird daher hoch belastet (Bruchgefahr) und der mögliche Beugewinkel beeinträchtigt. Aus der US 3,677,031 ist ein weiteres Gelenk mit einem Federbalg bekannt, wobei elastische Lamellen mit relativ großen Durchmesser drehfest mit Wellen verbunden sind. Zur Bildung eines solchen Federbalgs können auch mehreren Lamellen vorgesehen sein. In diese Lamellen sind durch Öffnungen Speichen freigeschnitten, die im Querschnitt wellenförmig ausgebildet sind. Diese Speichen sind biegsam und bewirken im wesentlichen die Biegeeigenschaft des Gelenks. Diese biegsamen Speichen erlauben keine Übertragung von hohen Drehmomenten bei hohen Drehzahlen.

Zudem werden auf die hierbei verwendeten Lamellen die an den damit verbundenen Wellen wirkenden Kräfte unmittelbar übertragen, so daß durch den Federbalg sowohl Kipp- als auch Längs- als auch Versatzbewegungen ausgeglichen werden müssen. Der Federbalg wird daher sehr stark belastet und um einen in der Praxis brauchbaren Beugewinkel zu erhalten, müssen die Lamellen bzw. der Federbalg einen beträchtlichen Durchmesser aufweisen.

Aufgabe der Erfindung ist, ein einfach und robust aufgebautes homokinetisches Gelenk zu schaffen, mit dem Drehbewegungen mit hohen Drehzahlen und hohe Leistungen übertragen werden können und das sich insbesondere als Antriebsgelenk im Kraftfahrzeugbau eignet.

Diese Aufgabe wird durch die Merkmale des Anspruchs 1 gelöst. Vorteilhafte Weiterbildungen der Erfindung werden in den Unteransprüchen gekennzeichnet. Anhand der Zeichnung wird die Erfindung im folgenden beispielhaft näher erläutert. Es zeigen:

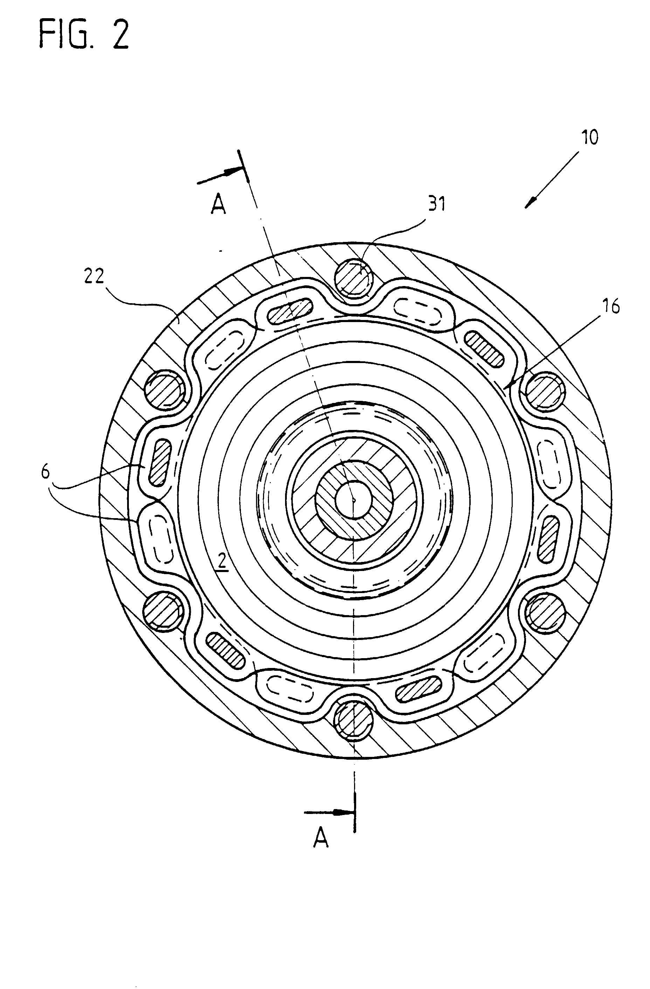

- Fig. 1: einen Längsschnitt durch das Gelenk entlang der Linie A-A in Fig. 2 mit Blickrichtung in Pfeilrichtung;
- Fig. 2: einen Querschnitt durch das Gelenk entlang der Linie B-B in Fig. 1 mit Blickrichtung in Pfeilrichtung;
- Fig. 3: einen Längsschnitt durch das Gelenk entsprechend Fig. 1 in einer abgewinkelten Stellung;
- Fig. 4: einen Längsschnitt entsprechend Fig. 1 durch eine weitere Ausführungsform des Gelenks;

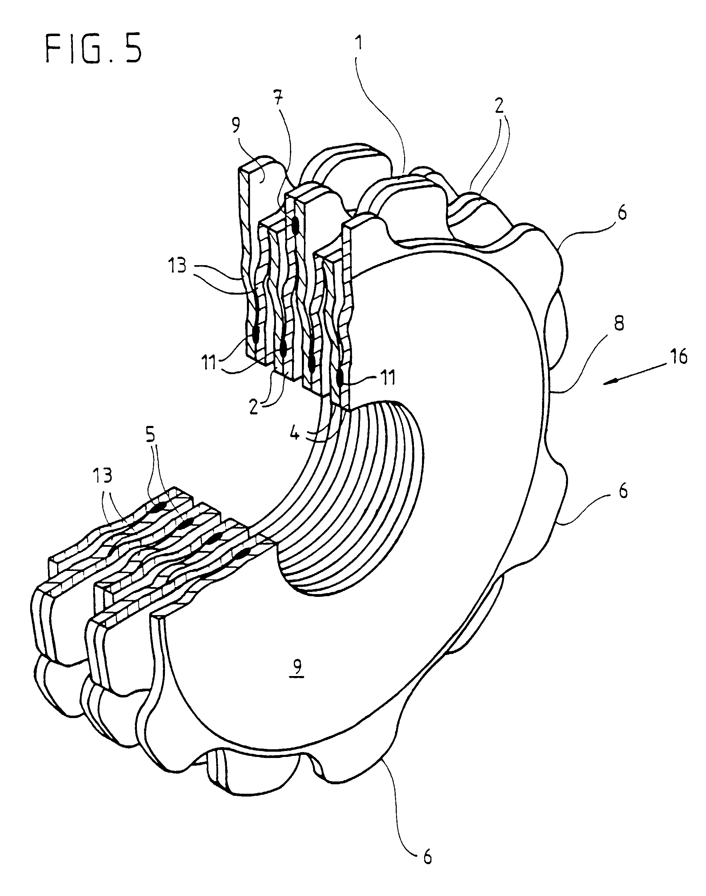

- Fig. 5: eine perspektivische Darstellung des Federbalgs mit einem Ausschnitt.

Das abgebildete Beispiel zeigt ein homokinetisches Antriebsgelenk 10 für ein Kraftfahrzeug. Es setzt sich im wesentlichen aus einem primären Gelenkteil 12 und einem sekundären Gelenkteil 14 zusammen, wobei zwischen den Gelenkteilen 12 und 14 ein Federbalg 16 angeordnet ist.

Der Federbalg 16 besteht aus mehreren, nebeneinander angeordneten ringförmigen Segmenten 1. Im dargestellten Beispiel sind drei Segmente 1 vorgesehen. Die ringförmigen Segmente 1 sind aus aneinandergesetzten Ringscheiben 2 aufgebaut, die sich peripher berühren und von der Peripherie zum Ringloch 4 einen keilförmigen Spalt 3 bildend divergieren. Im Bereich des Ringlochs 4 sind benachbarte Segmente 1 durch z.B. Punktschweißungen 5 miteinander verbunden. Peripher weisen die Segmente 1 mehrere, sich radial nach außen erstreckende Vorsprünge 6 am Umfang verteilt auf. Im Bereich dieser Vorsprünge 6 sind die Ringscheiben 2 miteinander z.B. durch Punktschweißungen 7 verbunden. Die Vorsprünge 6 benachbarter Segmente 1 sind - frontal betrachtet - verdreht zueinander angeordnet, so daß die Vorsprünge 6 des einen Segments 1 im Bereich einer Lücke 8 zwischen zwei Vorsprüngen 6 des benachbarten Segments 1 angeordnet sind.

Seitlich werden die Segmente 1 jeweils von einer Begrenzungsscheibe 9 begrenzt, wobei die Begrenzungsscheiben 9 die gleiche Raumform besitzen wie die Ringscheiben 2 und demgemäß auch Vorsprünge 6 aufweisen. Die Begrenzungsscheiben 9 sind im Bereich des Ringlochs 4 über z.B. Punktschweißungen 11 mit dem angrenzenden Segment 1 verbunden.

Wesentlich ist, daß die Ringscheiben 2 und zweckmäßigerweise auch die Begrenzungsscheiben 9 mehrere, zum Ringloch 4 konzentrisch angeordnete Sicken 13 aufweisen. Aus dieser Sickenanordnung resultiert ein im Querschnitt der Ringwandung betrachtet wellenförmiger Verlauf der Wandung. Die Sicken 13 benachbarter Ringscheiben 2 bzw. benachbarter Begrenzungsscheiben 9 sind raumform-mäßig gleich und gleichgerichtet, so daß sich in Achsrichtung des Federbalges 16 betrachtet benachbarte Sicken 13 formschlüssig ineinanderschmiegen können, wenn der Federbalg zusammengedrückt wird.

Das Ringloch 4 wird von einer vorzugsweise hohlzylindrischen Führungshülse 38 mit Spiel durchgriffen, die einendig einen Ringflansch 15 aufweist, an den die Vorsprünge 6 der einen Begrenzungsscheibe 9 durch Punktschweißungen 17 befestigt sind. Der Faltenbalg 16 wird zweckmäßigerweise von einer ebenfalls am Ringflansch 15 befestigten zylindrischen Schutzkappe 44 mit radialem Abstand übergriffen. Im der Schutzkappe 44 gegenüberliegenden Flächenbereich des Ringflansches 15 ist z.B. die Getriebeausgangswelle 22 eines Kraftfahrzeugantriebs befestigt. Der Ringflansch 15, die Führungshülse 38 und die Schutzkappe 44 sind die wesentlichen Bestandteile des primären Gelenkteils 12.

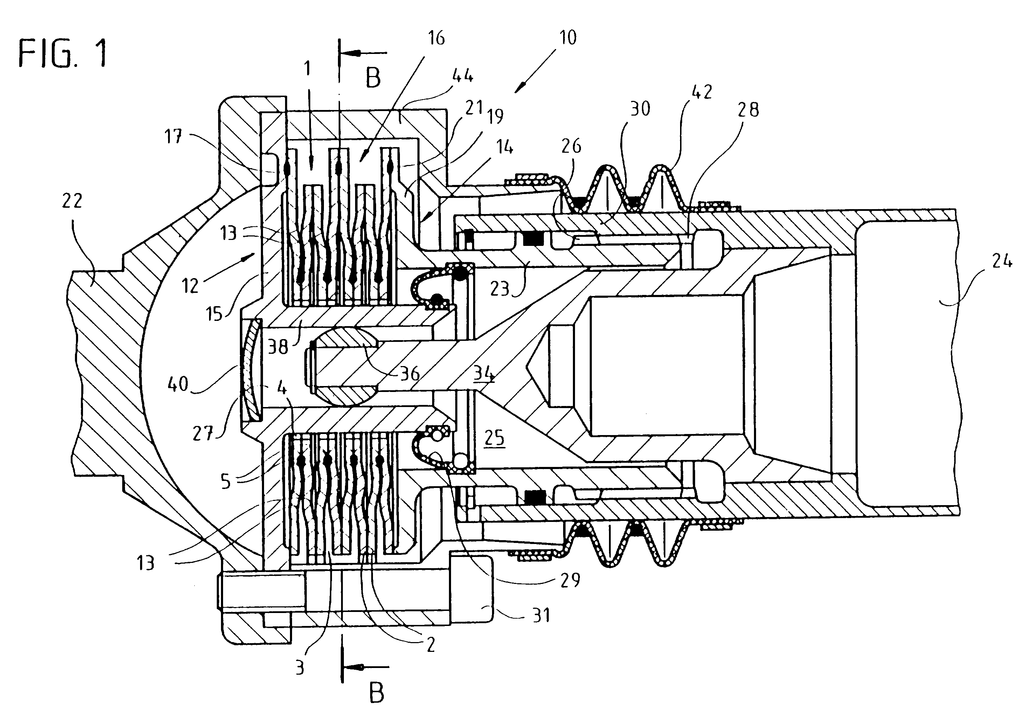

Das sekundäre Gelenkteil 14 weist einendig ebenfalls einen Ringflansch 19 auf, der etwa den gleichen Durchmesser wie der Ringflansch 15 hat und an dem die Vorsprünge 6 der anderen Begrenzungsscheibe 9 z.B. mit Punktschweißungen 21 befestigt sind. An den Ringflansch 19 ist eine sich vom Federbalg 16 weg erstreckende hohlzylindrische Buchse 23 angesetzt, deren Innendurchmesser ein Stück größer ist als der Außendurchmesser der Führungshülse 38, wobei die Führungshülse 38 in gestrecktem Zustand des Gelenks 10 (Fig. 1) koaxial ein Stück in die Buchse 23 ragt. Die Buchse 23 wird von einer zylindrischen Schiebemuffe 30 übergriffen, wobei die Buchse 23 am Umfang sich parallel zu ihrer Längsachse erstreckende Außenzähne 26 und die Schiebemuffe 30 auf ihrer Zylinderinnenfläche angeordnete, zwischen die Zähne 26 greifende Innenzähne 28 aufweist.

Die Schiebemuffe 30 überragt die Buchse 23 ein Stück in die zur Getriebeausgangswelle 22 entgegengesetzte Richtung und steht z.B. mit einer Kardanwelle 24 in Verbindung.

Zweckmäßigerweise übergreift ein Teil der Schutzkappe 44 mit radialem Abstand auch einen Teilbereich der Schiebemuffe 30, wobei in diesem Bereich zwischen der Schutzkappe 44 und der Schiebemuffe 30 vorteilhafterweise eine axial dehnbare Abdeckmanschette 42 vorgesehen ist, die den Innenraum des Gelenks 10 vor Verschmutzungen schützt.

Im Innenraum 25 der Schiebemuffe 30 ist zentral ein Führungszapfen 34 angeordnet, der kardanwellenseitig vor der Innenverzahnung 28 befestigt ist, ein Stück in den Innenraum 27 der Führungshülse 38 ragt und hier mit einem zentrierenden Kugelkopf 36 formschlüssig im Innenraum 27 sitzt.

Zweckmäßigerweise ist die Führungshülse 38 getriebeausgangswellenseitig mit einer Kunststoffkappe 40 verschlossen, so daß der Innenraum 27 von dieser Seite nicht verschmutzt werden kann. Des weiteren ist auch die Ringspaltmündung zwischen der Führungshülse 38 und der Buchse 23 kardanwellenseitig mit einem axial dehnbaren Dichtmanschettenring 29 abgedichtet, so daß auch der Federbalg 16 nicht verschmutzen kann.

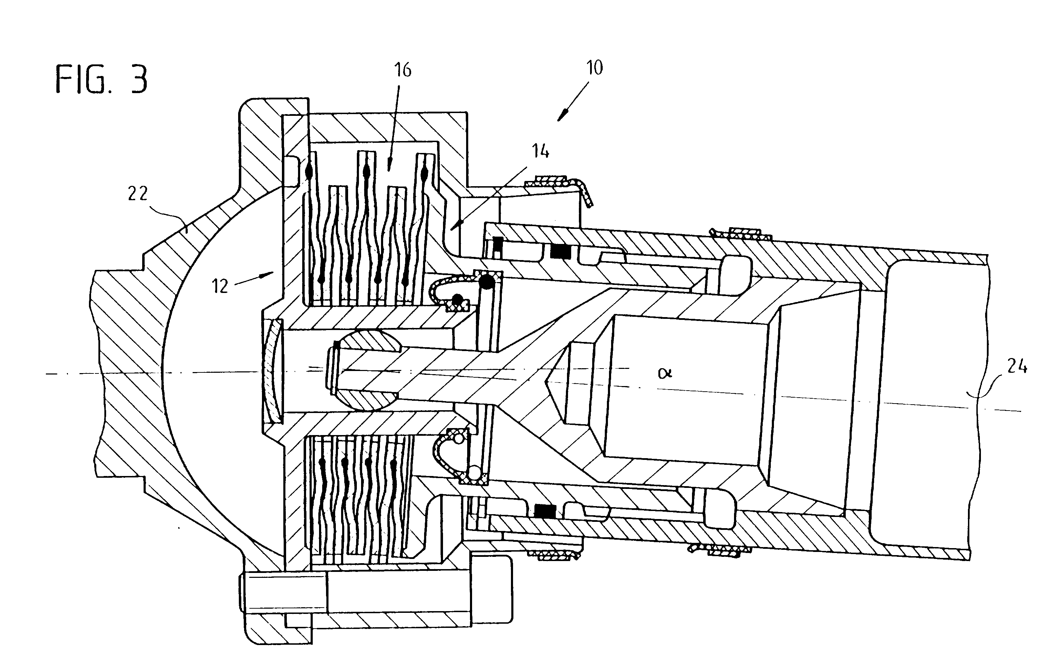

Aus dem Aufbau des Gelenks 10 ergibt sich, daß das sekundäre Gelenkteil 14, an dem der Flansch 19, die Buchse 23, die Schiebemuffe 30, der Führungszapfen 34 mit Kugelkopf 36 sowie die Kardanwelle 24 sitzen, gegenüber dem primären Gelenkteil 12 verwinkelt werden kann, wie der Winkel "α" in Fig. 3 verdeutlicht. Dabei wird der eine Teilbereich des Federbalgs 16 zusammengedrückt und der gegenüberliegende Teilbereich des Federbalgs 16 auseinandergezogen.

Da sich die Segmente 1 und die Begrenzungsscheiben 9 des Federbalgs 16 über die Sicken 13 abstützen können, wird eine Verdrehung der Federbalgteile untereinander verhindert, so daß sehr hohe Drehmomente, die z.B. über die Verzahnung 26,28 von der Kardanwelle 24 auf den Federbalg 16 übertragen werden, ohne Verformung aufgenommen werden können, woraus ein homokinetisches Gelenk resultiert.

Die in Betrieb des Kraftfahrzeuges sich ergebenden Winkeländerungen zwischen der Getriebeausgangswelle 22 und der Kardanwelle 24 werden durch die elastische Verwinkelung des Federbalgs 16 aufgenommen. Auftretende Längenänderungen zwischen Kardanwelle 24 und Getriebeausgleichswelle 22 werden über den axialen Längenausgleich zwischen den Zähnen 26,28 durch die Schiebemuffe 30 relativ zum Gelenkteil 14 ausgeglichen und somit vom Federbalg 16 ferngehalten. Dabei kann der Kugelkopf 36 frei im Innenraum 27 der Führungshülse 38 entsprechend mitgleiten. Über die Mittenzentrierung mittels des Kugelkopfes 36 in Verbindung mit der Führungshülse 38 an dem primären Gelenkteil 12 werden radiale Schwingungen und Verlagerungen abgestützt und somit eine definierte, durch den Mittelpunkt des Kugelkopfes 36 verlaufende Gelenkmittelachse sichergestellt. Das Antriebsmoment wird von der Getriebeausgangswelle 22 auf das primäre Gelenkteil 12 dann über den Federbalg 16 auf das sekundäre Gelenkteil 14 und schließlich von der Schiebemuffe 30 auf die Kardanwelle 24 übertragen.

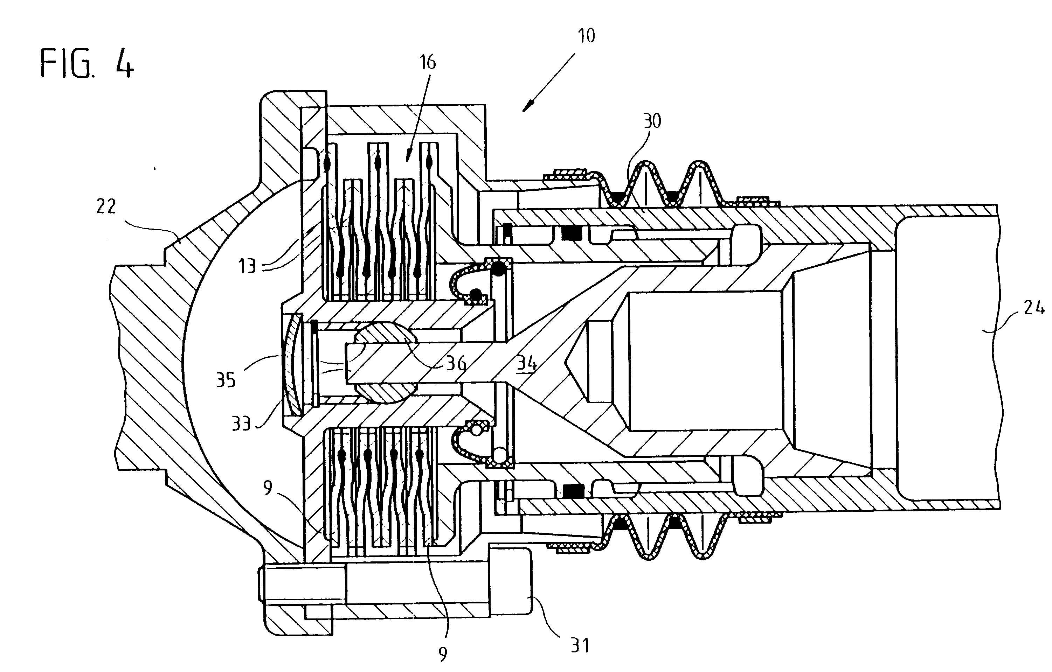

Nach einer in Fig. 4 dargestellten Ausführungsform des erfindungsgemäßen Gelenks kann der Kugelkopf 36 in der Längsmitte der Führungshülse 38 und damit auch im Bereich der Längsmitte des Federbalgs 16 axial fest, jedoch drehbar sitzen und somit Bestandteil der Führungshülse 38 sein. In diesem Fall ist vorgesehen, daß der freie Endbereich 33 des Führungszapfens 34 lediglich formschlüssig in einer entsprechenden Bohrung 35 des Kugelkopfes 36 steckt und in Achsrichtung der Bohrung 35 frei verschieblich lagert, so daß der Längenausgleich der Schiebemuffe 30 auch in diesem Fall gewährleistet ist.

Zweckmäßigerweise sind die wesentlichen Teile des primären Gelenkteils 12, nämlich die Getriebeausgangswelle 22 und die Schutzkappe 44 peripher mit am Umfang verteilten Schrauben 31 mit dem Ringflansch 15 verbunden, wobei die Schrauben 31 mit ihrem Schraubenkopf kardanwellenseitig vor Kopf gegen einen Rand der Schutzkappe 44 stoßen, mit ihrem Schaft entsprechende Bohrungen in der Schutzkappenwandung durchgreifen und in ein peripher angeordnetes Loch im Ringflansch 15 sowie in einem entsprechenden Loch in der Getriebeausgangswelle 22 geschraubt sind.

Die sich durch die Sicken 13 ergebende Welligkeit der Segmente 1 wirkt einer Ausbeulung bei der Verwinkelung entgegen, gewährleistet größere axiale Wege wegen der radialen Streckbarkeit der Ringe bzw. Ringscheiben 2 und ergibt eine weiche Biege-Federkennlinie des Federbalges 16 und garantiert die Formstabilität des Gelenks bei hohen Belastungen. Anstelle der Sicken 13 können auch andere ähnliche Formelemente, wie z.B. Kalotten, Wülste oder dergleichen, vorgesehen sein.

Wesentlich ist, daß trotz Mittenzentrierung der Kardanwelle 24 eine Längsverschiebung der Kardanwelle nicht auf den Federbalg 16 übertragen wird.

## Patentansprüche

1. Homokinetisches Gelenk, insbesondere als Antriebsgelenk in einem Kraftfahrzeug mit einem primären Gelenkteil (12) und einem sekundären Gelenkteil (14), wobei zwischen den Gelenkteilen (12, 14) ein Federbalg (16) angeordnet ist, der mindestens ein Segment aufweist, das aus zwei aneinandergesetzten, lediglich ein zentrales Ringloch (4) aufweisenden Ringscheiben (2) aufgebaut ist, die peripher oder im Bereich des Ringlochs (4) fest miteinander verbunden sind, von der Peripherie zum Ringloch (4) oder umgekehrt einen Spalt (3) bilden und im Bereich des jeweiligen Ringlochs (4) oder der Peripherie mit dem jeweiligen Gelenkteil (12 bzw. 14) fest verbunden sind und wobei die Wandungen der Ringscheiben (2) sich seitlich gegenüberliegende, gleichgerichtete, gleichgeformte Ausbuchtungen (13) in Form von sich beim Zusammendrücken der Ringscheiben (2) formschlüssig ineinander schmiegenden Sicken aufweisen, woraus eine im Querschnitt wellenförmige Wandung der Ringscheiben (2) resultiert.

2. Gelenk nach Anspruch 1,
dadurch **gekennzeichnet**,
daß bei mehreren Segmenten (1) die Ringscheiben (2) zickzackförmig miteinander verbunden sind, wobei die jeweils endseitige Ringscheibe (2) mit dem jeweiligen Gelenkteil (12,14) fest verbunden ist.

3. Gelenk nach Anspruch 1 oder 2,
dadurch **gekennzeichnet**,
daß der Federbalg (16) mehrere Segmente (1) aufweist und jedes äußere Segment (1) von einer Begrenzungsscheibe (9) begrenzt wird, die einseitig im Bereich des Ringlochs (4) oder der Peripherie mit dem jeweiligen Segment (1) und anderseitig mit dem Gelenkteil (12 bzw. 14) fest verbunden ist.

4. Gelenk nach Anspruch 3,
dadurch **gekennzeichnet**,
daß die Begrenzungsscheibe (9) die gleiche Raumform aufweist wie eine Ringscheibe (2).

5. Gelenk nach einem oder mehreren der Ansprüche 1 bis 4,
dadurch **gekennzeichnet**,
daß die Ringscheiben (2) eines Segments (1) peripher mehrere, sich radial erstreckende, sich gegenüberliegende Vorsprünge (6) am Umfang verteilt aufweisen und im Bereich der Vorsprünge (6) miteinander verbunden sind.

6. Gelenk nach einem oder mehreren der Ansprüche 3 bis 5,
dadurch **gekennzeichnet**,
daß die Begrenzungscheiben (9) peripher mehrere, sich radial erstreckende, sich gegenüberliegende Vorsprünge (6) am Umfang verteilt aufweisen und im Bereich der Vorsprünge (6) mit dem Gelenkteil (12 bzw. 14) fest verbunden sind.

7. Gelenk nach Anspruch 5 und/oder 6,
**dadurch gekennzeichnet,**
daß die Vorsprünge (6) benachbarter Segmente (1) versetzt zueinander angeordnet sind, so daß die Vorsprünge (6) des einen Segments (1) im Bereich einer Lücke (8) zwischen zwei Vorsprüngen des benachbarten Segments (1) angeordnet sind.

8. Gelenk nach einem oder mehreren der Ansprüche 1 bis 7,
dadurch **gekennzeichnet** ,
daß das Gelenkteil (12) einen Ringflansch (15) aufweist, an dem einseitig der Federbalg (16), insbesondere über die Vorsprünge (6) einer Begrenzungsscheibe (9) betestigt ist und an dem anderseitig eine Getriebeausgangswelle (22) sitzt.

9. Gelenk nach Anspruch 8,
dadurch **gekennzeichnet**,
daß der Federbalg (16) von einer am Flansch (15) befestigten zylindrischen Schutzkappe (44) mit radialem Abstand übergriffen wird.

10. Gelenk nach einem oder mehreren der Ansprüche 1 bis 9,
dadurch **gekennzeichnet**,
daß das sekundäre Gelenkteil (14) einen Ringflansch (19) aufweist, an dem der Federbalg (16) insbesondere über die Vorsprünge (6) einer Begrenzungsscheibe (9) befestigt ist.

11. Homokinetisches Gelenk nach einem oder mehreren der Ansprüche 1 bis 10,
dadurch **gekennzeichnet,**
daß zwischen einem der Gelenkteile (12, 14) und deren Anschlußteil (22, 24), vorzugsweise zwischen dem sekundären Gelenkteil (14) und dem Anschlußteil (24) eine Einrichtung (26, 28, 30) für einen axialen Längenausgleich angeordnet ist.

12. Gelenk nach Anspruch 11,
dadurch **gekennzeichnet**,
daß am Ringflansch (19) auf der vom Federbalg (16) abgewandten Seite konzentrisch eine hohlzylindrische Buchse (23) angesetzt ist, die von einer zylindrischen Schiebemuffe (30) übergriffen wird, wobei die Buchse (23) am Umfang sich parallel zu ihrer Längsachse erstreckende Außenzähne (26) und die Schiebemuffe (30) auf der Zylinderinnenfläche angeordnete, zwischen die Zähne (26) greifende Innenzähne (28) aufweisen und wobei die Schiebemuffe (30) die Buchse (23) ein Stück in Richtung Anschlußteil (24) überragt und mit dem Anschlußteil (24) in Verbindung steht.

13. Gelenk nach Anspruch 11 und/oder 12,
dadurch **gekennzeichnet**,
daß ein Teil der Schutzkappe (44) mit radialem Abstand einen Teilbereich der Schiebemuffe (30) übergreift, wobei in diesem Bereich zwischen der Schutzkappe (44) und der Schiebemuffe (30) eine axial dehnbare Abdeckmanschette (42) angeordnet ist.

14. Gelenk nach einem oder mehreren der Ansprüche 11 bis 13,
**gekennzeichnet** durch
eine an sich bekannte Mittenzentrierung (36,38) zwischen den Gelenkteilen (12,14).

15. Gelenk nach Anspruch 14,
dadurch **gekennzeichnet**,
daß im Innenraum (25) der Schiebemuffe (30) zentral ein Führungszapfen (34) angeordnet ist, der vor der Innenverzahnung (28) befestigt ist, ein Stück in den Innenraum (27) einer Führungshülse (38) ragt, die das Ringloch (4) des Federbalgs (16) mit Spiel durchgreift und einendig am Ringflansch (15) befestigt ist, wobei das freie Ende des Führungszapfens (34) mit einem formschlüssig im Innenraum (27) sitzenden zentrierenden Kugelkopf (36) bestückt ist.

16. Gelenk nach Anspruch 15,
dadurch **gekennzeichnet**,
daß die Führungshülse (38) flanschseitig mit einer Kunststoffkappe (40) verschlossen ist.

17. Gelenk nach einem oder mehreren der Ansprüche 11 bis 16,
dadurch **gekennzeichnet**,
daß die Ringspaltmündung zwischen der Führungshülse (38) und der Buchse (23) mit einem axial dehnbaren Dichtmanschettenring (29) abgedichtet ist.

18. Gelenk nach einem oder mehreren der Ansprüche 15 bis 17,
dadurch **gekennzeichnet**,
daß der Kugelkopf (36) in der Längsmitte der Führungshülse (38) und im Bereich der Längsmitte des Federbalgs (16) axial fest, jedoch drehbar sitzt, wobei der freie Endbereich (33) des Führungszapfens (34) formschlüssig in einer entsprechenden Bohrung (35) des Kugelkopfes (36) steckt und in Achsrichtung der Bohrung (35) frei verschieblich lagert.

19. Gelenk nach einem oder mehreren der Ansprüche 1 bis 18,
dadurch **gekennzeichnet**,
daß die wesentlichen Teile des primären Gelenkteils (12) peripher mit am Umfang verteilten Schrauben (31) mit dem Ringflansch (15) verbunden sind.

20. Gelenk nach Anspruch 19,
dadurch **gekennzeichnet**,
daß mittels der Schrauben (31) auch das Anschlußteil (22) am Flansch befestigt ist.

## Claims

1. Constant-velocity transmission joint, in particular a drive joint in a motor vehicle, with a primary link component (12) and a secondary link component (14), such that a concertina spnng (16) is arranged between the link components (12, 14), which comprises at least one segment made of two ring discs (2) opposite one another and having only a central ring hole (4), which are solidly attached to one another peripherally or in the area of the ring hole (4), forming a gap (3) that extends from the periphery to the ring hole (4) or vice-versa and being solidly attached to the corresponding link component (12 or 14 respectively) in the area of the respective ring hole (4) or periphery, and such that the walls of the ring discs (2) comprise salients (13) of the same shape opposite one another at the sides and extending in the same direction in the shape of pleats which engage in one another in a form-closing way when the ring discs (2) are pressed together, resulting in a ring disc (2) wall of undulating cross-section.

2. Transmission joint according to Claim 1,
**characterized in that**
in several segments (1) the ring discs (2) are connected together in a zig-zag shape, with the respective ring discs (2) at the ends solidly attached to the corresponding link component (12, 14).

3. Transmission joint according to Claims 1 or 2,
**characterized in that**
the concertina spring (16) comprises several segments (1) and each outer segment (1) is bounded by a bounding disc (9) which, on one side and in the area of the ring hole (4) or of the periphery, is solidly attached to the corresponding segment (1) and on the other side is solidly attached to the link component (12 or 14).

4. Transmission joint according to Claim 3,
**characterized in that**
the bounding disc (9) has the same spatial form as a ring disc (2).

5. Transmission joint according to one or more of Claims 1 to 4,
**characterized in that**
the ring discs (2) of a segment (1) have several peripheral projections (6) distributed around their circumference opposite one another and extending radially, and are connected together in the area of the said projections (6).

6. Transmission joint according to one or more of Claims 3 to 5,
**characterized in that**
the bounding discs (9) have several peripheral projections (6) distributed around their circumference opposite one another and extending radially, and are solidly attached to the link component (12 or 14) in the area of the said projections (6).

7. Transmission joint according to Claim 5 and/or Claim 6,
**characterized in that**
the projections (6) of adjacent segments (1) are arranged in positions displaced relative to one another so that the projections (6) of one segment (1) are positioned in the area of a gap (8) between two projections of the adjacent segment (1).

8. Transmission joint according to one or more of Claims 1 to 7,
**characterized in that**
the link component (12) comprises a ring flange (15) to one side of which the concertina spring (16) is attached, in particular by means of the projections (6) of a bounding disc (9), and on the other side of which a drive output shaft (22) is positioned

9. Transmission joint according to Claim 8,
**characterized in that**
the concertina spring (16) is covered by a cylindrical protective cap (44) radially some distance away from it and attached to the flange (15).

10. Transmission joint according to one or more of Claims 1 to 9,
**characterized in that**
the secondary link component (14) comprises a ring flange (19) to which the concertina spring (16) is attached, in particular by means of the projections (6) of a bounding disc (9).

11. Constant-velocity transmission joint according to one or more of Claims 1 to 10,
**characterized in that**
between one of the link components (12, 14) and its connection piece (22, 24), preferably between the secondary link component (14) and the connection piece (24), a device (26, 28, 30) for axial longitudinal compensation is positioned.

12. Transmission joint according to Claim 11,
**characterized in that**
on the ring flange (19), on the side facing away from the concertina spring (16) and concentrically, a hollow cylindrical bush (23) is positioned, the said bush being surrounded by a cylindrical sliding sleeve (30), such that the bush (23) comprises around its circumference external splines (26) extending parallel to its long axis and the sliding sleeve (30) comprises around its cylindrical inner surface internal splines (28) that engage between the splines (26), and such that the sliding sleeve (30) projects a little beyond the bush (23) in the direction of the connection piece (24) and is connected to the said connection piece (24).

13. Transmission joint according to Claim 11 and/or Claim 12,
**characterized in that**
part of the protective cap (44) surrounds part of the sliding sleeve (30) radially some distance away from it, such that in this area, between the protective cap (44) and the sliding sleeve (30), an axially extendable covering collar (42) is positioned.

14. Transmission joint according to one or more of Claims 11 to 13,
**characterized in that**
there is a centering device (36, 38) of a type known in its own right between the link components (12, 14).

15. Transmission joint according to Claim 14,
**characterized in that**
in the space (25) inside the sliding sleeve (30) a guide-pin (34) is positioned centrally, which is attached in front of the internal splines (28) and projects some way into the internal space (27) of a guide sleeve (38), the said sleeve passing through the ring hole (4) of the concertina spring (16) with some clearance and being attached to the ring flange (15) at one end, such that the free end of the guide pin (34) is fitted in a form-closing way with a centering ball head (36) located inside the said internal space (27).

16. Transmission joint according to Claim 15,
**characterized in that**
the guide sleeve (38) is closed at the flange end by a plastic cap (40).

17. Transmission joint according to one or more of Claims 11 to 16,
**characterized in that**
the mouth of the annular gap between the guide sleeve (38) and the bush (23) is sealed by an axially extendable sealing sleeve-ring (29).

18. Transmission joint according to one or more of Claims 15 to 17,
**characterized in that**
the ball head (36) is located in an axially fixed position half-way along the guide sleeve (38) and approximately in the middle of the concertina spring (16) but can rotate, such that the free end zone (33) of the guide-pin (34) passes form-closingly through a corresponding hole (35) in the ball head (36) and can slide freely in the axial direction of the said hole (35).

19. Transmission joint according to one or more of Claims 1 to 18,
**characterized in that**
the essential parts of the primary link component (12) are attached peripherally to the ring flange (15) by means of screw-bolts (31) distributed around the circumference.

20. Transmission joint according to Claim 19,
**characterized in that**
by means of the screw-bolts (31), the connection piece (22) is also attached to the flange.

## Revendications

1. Joint de transmission homocinétique servant en particulier de joint d'entraînement dans un véhicule à moteur, comportant une partie de joint primaire (12), et une partie de joint secondaire (14), un soufflet élastique (16) étant agencé entre les parties de joint (12, 14), ce soufflet présentant au moins un segment formé par deux disques annulaires (2) réunis, ne comportant qu'un trou annulaire central (4), ces disques étant solidarisés entre eux par leur périphérie ou dans la région du trou annulaire (4), formant une fente (3) de la périphérie jusqu'au trou annulaire (4), ou inversement, et étant solidarisés à la partie de joint respective (12 ou 14) dans la région du trou annulaire respectif (4) ou de la périphérie, les parois des disques annulaires (2) présentant des sinuosités latérales (13) mutuellement en regard, orientées dans la même direction et de même forme, ayant la forme de moulures qui s'encastrent l'une dans l'autre de par leur forme lorsqu'on comprime les disques annulaires (2), ce qui donne à la paroi des disques annulaires (2) une forme ondulée en section transversale.

2. Joint selon la revendication 1,
caractérisé en ce que, en cas de plusieurs segments (1), les disques annulaires (2) sont reliés entre eux en zigzag, le disque annulaire (2) respectivement terminal étant solidarisé à la partie de joint respective (12, 14).

3. Joint selon la revendication 1 ou 2,
caractérisé en ce que le soufflet (16) comporte plusieurs segments (1), et en ce que chaque segment externe (1) est délimité par un disque de délimitation (9) solidarisé d'un côté, dans la région du trou annulaire (4) ou de la périphérie, au segment respectif (1), et de l'autre, à la partie de joint (12 ou 14).

4. Joint selon la revendication 3,
caractérisé en ce que le disque de délimitation (9) présente la même forme spatiale que le disque annulaire (2).

5. Joint selon l'une ou plusieurs des revendications 1 à 4,
caractérisé en ce que les disques annulaires (2) d'un segment (1) présentent, réparties sur leur périphérie, plusieurs saillies mutuellement en regard (6), qui s'étendent dans la direction radiale, les disques annulaires étant reliés entre eux dans la région des saillies (6).

6. Joint selon l'une ou plusieurs des revendications 3 à 5,
caractérisé en ce que les disques de délimitation (9) présentent, réparties sur leur périphérie, plusieurs saillies (6) mutuellement en regard et s'étendant dans la direction radiale, les disques de délimitation étant solidarisés à la partie de joint (12 ou 14) dans la région desdites saillies (6).

7. Joint selon la revendication 5 et/ou 6,
caractérisé en ce que les saillies (6) de segments voisins (1) sont décalés entre elles, de manière à ce que les saillies (6) d'un segment (1) soient agencées dans la région d'un vide entre deux saillies du segment voisin (1).

8. Joint selon l'une ou plusieurs des revendications 1 à 7,
caractérisé en ce que la partie de joint (12) comporte une bride annulaire (15) sur un côté de laquelle est fixé le soufflet (16), en particulier au moyen des saillies (6) d'un disque de délimitation (9), et sur l'autre côté duquel est disposé un arbre de sortie de transmission (22).

9. Joint selon la revendication 8,
caractérisé en ce qu'un capot de protection cylindrique (44) fixé sur la bride (15) coiffe le soufflet (16) en ménageant une certaine distance radiale.

10. Joint selon l'une ou plusieurs des revendications 1 à 9,
caractérisé en ce que la partie de joint secondaire (14) comporte une bride annulaire (19) sur laquelle est fixé le soufflet (16), en particulier au moyen des saillies (6) d'un disque de délimitation (9).

11. Joint de transmission homocinétique selon l'une ou plusieurs des revendications 1 à 10,
caractérisé en ce qu'un moyen (26, 28, 30) de compensation axiale de longueur est agencé entre l'une des parties de joint (12, 14) et la pièce de liaison (22, 24) de celle-ci, de préférence entre la partie de joint secondaire (14) et la pièce de liaison (24).

12. Joint selon la revendication 11,
caractérisé en ce que, sur la bride annulaire (19), du côté opposé au soufflet (16), une douille en forme de cylindre creux (23) est fixée concentriquement, cette douille étant coiffée par un manchon coulissant cylindrique (30), la douille (23) comportant sur sa périphérie des dents externes (26) s'étendant parallèlement à son axe longitudinal, et le manchon coulissant (30) comportant des dents internes (28) disposées sur la surface inteme du cylindre et s'insérant entre les dents (26), le manchon coulissant (30) faisant saillie par rapport à la douille (23) d'une certaine distance dans la direction de la pièce de liaison (24) et étant en relation avec ladite pièce de liaison (24).

13. Joint selon la revendication 11 et/ou 12,
caractérisé en ce qu'une partie du capot de protection (44) coiffe une région partielle du manchon coulissant (30) en ménageant une distance radiale prédéterminée, une manchette de couverture (42), extensible dans la direction axiale, étant agencée dans cette région, entre le capot de protection (44) et le manchon coulissant (30).

14. Joint selon l'une ou plusieurs des revendications 11 à 13,
caractérisé par un moyen de centrage (36, 38), connu en soi, prévu entre les parties de joint (12, 14).

15. Joint selon la revendication 14,
caractérisé en ce qu'un ergot de guidage (34) est disposé centralement dans l'espace interne (25) du manchon coulissant (30), cet ergot étant fixé en amont de la denture interne (28) et faisant saillie sur une certaine distance dans l'espace interne (27) d'une douille de guidage (38) qui traverse avec jeu le trou annulaire (4) du soufflet (16), et qui est fixée par une extrémité sur la bride annulaire (15), l'extrémité libre de l'ergot de guidage (34) étant équipée d'une tête sphérique (36) de centrage insérée de par sa forme dans l'espace interne (27).

16. Joint selon la revendication 15,
caractérisé en ce que la douille de guidage (38) est fermée côté bride par un capot en matière synthétique (40).

17. Joint selon l'une ou plusieurs des revendications 11 à 16,
caractérisé en ce que l'embouchure de la fente annulaire entre la douille de guidage (38) et la douille (23) est rendue étanche par une bague de manchette d'étanchéité (29) axialement extensible.

18. Joint selon l'une ou plusieurs des revendications 15 à 17,
caractérisé en ce que la tête sphérique (36) est montée de manière ferme dans la direction axiale, mais néanmoins pivotante, au centre longitudinal de la douille de guidage et dans la région du centre longitudinal du soufflet (16), la région terminale libre (33) de l'ergot de guidage (34) étant insérée de par sa forme dans un alésage correspondant (35) de la tête sphérique (36), et pouvant coulisser librement dans la direction axiale de l'alésage (35).

19. Joint selon l'une ou plusieurs des revendications 1 à 18,
caractérisé en ce que les éléments essentiels de la partie de joint primaire (12) sont reliés à la bride annulaire (15) par des vis (31) réparties sur la périphérie.

20. Joint selon la revendication 19,
caractérisé en ce que les vis (31) fixent également la pièce de liaison (22) sur la bride.
